# EUROPÄISCHE PATENTSCHRIFT

(11) **EP 0 794 100 B1**
(45) Veröffentlichungstag und Bekanntmachung des Hinweises auf die Patenterteilung: **09.04.2003**
(21) Anmeldenummer: 97103069.7
(22) Anmeldetag: 26.02.1997
(51) Int. Cl.: B61F 5/30, B60G 11/58, F16F 13/00

(54) **Federeinrichtung zur Verbesserung des Fahrkomforts, insbesondere für Schienenfahrzeuge**
Resilient suspension for improving the riding comfort, especially for rail vehicles
Suspension destinée à améliorer le confort de conduite, notamment pour les véhicules ferroviaires

(30) Priorität: 06.03.1996 DE 19608617
(43) Veröffentlichungstag der Anmeldung: 10.09.1997
(73) Patentinhaber: ALSTOM LHB GmbH, 38239 Salzgitter (DE)
(72) Erfinder: Frederich, Fritz, Dr.-Ing. Prof., 47809 Krefeld (DE)

(56) Entgegenhaltungen:
- EP-A- 0 100 513
- DE-A- 2 336 782
- DE-A- 3 421 678
- FR-A- 2 518 948

## Beschreibung

Die Erfindung betrifft eine Federeinrichtung zur Verbesserung des Fahrkomforts, insbesondere für Schienenfahrzeuge die Ausgestaltung der zwischen Radsätzen und Fahrwerksrahmen von Fahrwerken geschalteten Federung. Das vorgesehene Verfahren soll einerseits die vorgegebenen, kleinen zulässigen sog. statischen Einfederungen der als Primärfederung bezeichneten Federstufe zwischen den Beladungszuständen 'Fahrzeug leer' und 'Fahrzeug beladen' einhalten und andererseits in jedem beliebigen Beladungszustand einen möglichst großen dynamischen Federweg beim Überfahren von Schienenlagefehlern zulassen. d.h. als sehr weiche Federung auf vertikale Anregungen aus der Schienenfahrfläche reagieren.
Eine derartige Federung ist in der Lage, vom Gleis auf die Räder des Fahrwerks übertragene vertikale Verschiebungen als sehr kleine Kräfte an die Masse des Fahrwerksrahmens weiterzugeben. In Verbindung mit der Masse des Fahrwerksrahmens entstehen daraus auch kleine bis sehr kleine Beschleunigungen des Fahrwerksrahmens, was sich naturgemäß sehr günstig auf den Fahrkomfort des über eine weitere Federung, die Sekundärfederung, abgestützten Wagenkastens auswirken muß.
Von einer extrem weichen Primärfederung ist ferner zu erwarten, daß die geringen Federkräfte auch geringe Rückwirkung haben und damit den Rad/Schiene-Kontakt und desweiteren den Oberbau des Gleises schonen.

Es ist bekannt, daß anspruchsvolle Fahrwerke für Schienenfahrzeuge mit zwei Federstufen ausgerüstet werden: der Primärfederung zwischen Radsätzen und Fahrwerksrahmen und der Sekundärfederung zwischen Fahrwerksrahmen und Fahrzeugaufbau (Wagenkasten).

Zum Zwecke bestmöglicher Stoßisolierung wird die Sekundärfederung bei hochwertigen Fahrzeugen weich ausgelegt. Für die Primärfederung werden weiche Federungen bisher nicht angewendet. Weiche Primärfederungen wurden und werden für nicht notwendig erachtet. Wegen des unvermeidbaren großen Fahrweges und wegen stark zurückgehender Stabilisierung der Wankbewegungen werden weiche Primärfederungen sogar als schädlich angesehen und deshalb vermieden.

Harte Primärfederungen zwischen Radsätzen und Fahrwerksrahmen bewirken, daß die Massen von Radsätzen relativ starr an die Masse der Fahrwerksrahmen angekoppelt sind. Vertikalen Unebenheiten der Schienen können die Räder nur ausweichen, wenn sie gleichzeitig die Masse des Radsatzes und nur wenig gemindert auch die Masse des Fahrwerksrahmens in Bewegung setzen. Je schneller die Bewegungen desto größer werden die dabei auftretenden Kräfte.
Die von den Primärfedern übertragenen Kräfte machen sich als Aktionskräfte vom Radsatz auf den Fahrwerksrahmen bemerkbar. Große Primärfederkräfte erzeugen große Beschleunigungen des Fahrwerksrahmens, die letztlich über die Sekundärfederung bis auf den Fahrkomfort des Wagenkastens durchschlagen.
Die gleichen Primärfederkräfte wirken entgegengerichtet als Reaktionskräfte von der Primärfederung in den Radsatz und finden sich in den Rad/Schiene-Kontakten der Räder bzw. im Oberbau des Gleises wieder. Dort beanspruchen sie die Fahrflächen von Schienen und Rädern und die Bauelemente des Gleisoberbaus. Die Primärfederkräfte sind Teil der dynamischen Radlasten.
Harte Primärfedern verschlechtern den Fahrkomfort und erhöhen die dynamischen Radlasten.
Um diesem Mangel abzuhelfen, wird die Federstufe zwischen Radsatz und Fahrwerksrahmen so gestaltet, daß in allen Beladungszuständen eine sehr weiche Federung mit einer sehr flachen Federkennlinie vorliegt. Die zwischen den verschiedenen Beladungszuständen auftretenden großen Federwege werden durch einen geeigneten Niveauausgleich kompensiert. Die im engen Betriebsbereich der Feder sehr flache Kennlinie der Feder geht unmittelbar nach Überschreiten des Betriebsbereiches in einen extrem steilen Verlauf über. Dadurch wird erreicht, daß bei einem Ausfall des Niveauausgleichs zwar die Federung sehr hart wird, der unvermeidliche Federweg jedoch klein bleibt.

Aus der DE 23 36 782 A1 ist eine höhenverstellbare, progressiv wirkende Federvorrichtung für die Abfederung von Radachsen oder Drehgestellen gegenüber dem Fahrzeugrahmen oder Wagenkasten (Sekundärfederung) bekannt, die im wesentlichen aus einer sogenannten Rollringfeder besteht, die ein Gehäuse und einen kegelförmigen Dorn aufweist, zwischen denen ein ringförmiger Körper (Rollring) aus Gummi oder einem anderen elastomeren Werkstoff angeordnet ist. Um eine in weiten Grenzen regelbare Höhenverstellung und eine anpassbare Charakteristik zu verwirklichen, wobei der Federweg groß und die Federcharakteristik weich sein soll, ist das Gehäuse der Rollringfeder glokkenförmig ausgebildet und dadurch der von dem Gehäuse, dem ringförmigen Körper und dem kegelförmigen Dorn begrenzte Innenraum gasdicht abgeschlossen. Um im Innenraum einen bestimmten Gasdruck und damit ein pneumatisches Federkissen erzeugen und aufrechterhalten zu können, steht der Innenraum über eine Leitung mit einem Druckerzeuger in Verbindung, Zur Regelung der Höhe des Gasdruckes im abgeschlossenen Innenraum der Rollringfeder sind in der Leitung Regelungsmittel vorgesehen, durch welche die Rollringfeder höhenverstellbar ist.

Der Erfindung liegt die Aufgabe zugrunde, eine Federeinrichtung mit einer Federkennlinie zu schaffen, die bei allen Beladungszuständen eine gleichbleibend flache Federcharakteristik aufweist, ohne daß dabei große Federwege notwendig sind.

Die Aufgabe wird erfindungsgemäß durch die Merkmalkombination des Anspruchs 1. Die Zusatzfederung und der Ausgleich der Einfederung kann pneumatisch, hydraulisch oder auch mechanisch bzw. elektromechanisch geschehen.
Damit Ausfälle der gewählten Einrichtung nicht zu unerwünscht und nur zulässig großen Einfederungen führen, steigt die Federkennlinie nach Überschreiten des Betriebsbereiches sehr steil an.

Die mit der Erfindung erzielbaren Fortschritte bestehen insbesondere darin, daß im Betriebsbereich die dynamischen Federkräfte, die beim Überfahren eines Hindernisses entstehen, bei allen Beladungszuständen sehr gering bleichen. Dadurch wird ein von der Fahrbahnunebenheit an sich ausgehender Stoß bestmöglich abgefangen. Die Masse des Fahrwerksrahmens reagiert darauf nur noch mit einer verhältnismäßig kleinen Stoßbeschleunigung.
Beim Ausfall der Niveauregulierung kann zwar nicht verhindert werden, daß Stöße im Fahrwerksrahmen große Beschleunigungen erzeugen. Dafür bleibt jedoch der Federweg, der sich sonst bei einer durchgehend weichen Federung mit flacher Federkennlinie einschalten würde, wegen des steilen Anstiegs der Federcharakterisitik in engen zulässigen Grenzen.
Die vorgeschlagene Federcharakteristik läßt sich mit verschiedenen konstruktiven Ausgestaltungen verwirklichen.

Das der Erfindung zugrundeliegende Verfahren und technische Ausführungen, mit denen das Verfahren realisierbar ist, sind in den folgenden Beispielen beschreiben.

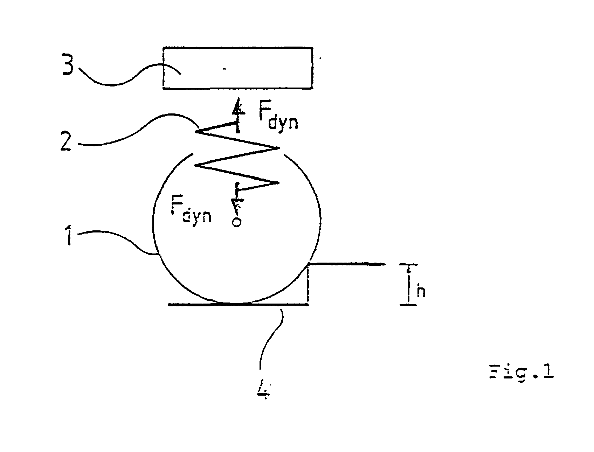

**Fig. 1** zeigt das theoretische Ersatzmodell eines Rades 1, das mittels der Primärfeder 2 gegenüber dem Fahrwerksrahmen 3 gefedert ist. Wenn das Rad 1 auf der Schiene 4 über ein Hindernis der Höhe h rollt, so wird es um den Betrag h angehoben. Dabei wird die Feder 2 an ihrem Fußpunkt um den gleichen Betrag h eingedrückt, was die Federkraft um die dynamische Federkraft F_{dyn} erhöht. Die dynamische Federkraft F_{dyn} wirkt am Fußpunkt der Feder 2 von oben nach unten auf das Rad 1. Am oberen Ende der Feder 2 ist die gleiche Kraft F_{dyn} in umgekehrter Richtung von der Feder 2 auf den Fahrwerksrahmen 3 als Reaktionskraft wirksam. Sie setzt den Fahrwerksrahmen 3 mit einer Beschleunigung in Bewegung, deren Größe direkt der Größe der dynamischen Federkraft F_{dyn} und umgekehrt der Größe der Masse des Fahrwerksrahmens 3 proportional ist. Wenn die Masse des Fahrwerksrahmens 3 konstant ist, läßt sich die Stoßbeschleunigung des Fahrwerksrahmens 3, die aus einer Fahrbahnunebenheit der Schiene 4 folgt, durch die Feder 2 direkt beeinflussen.

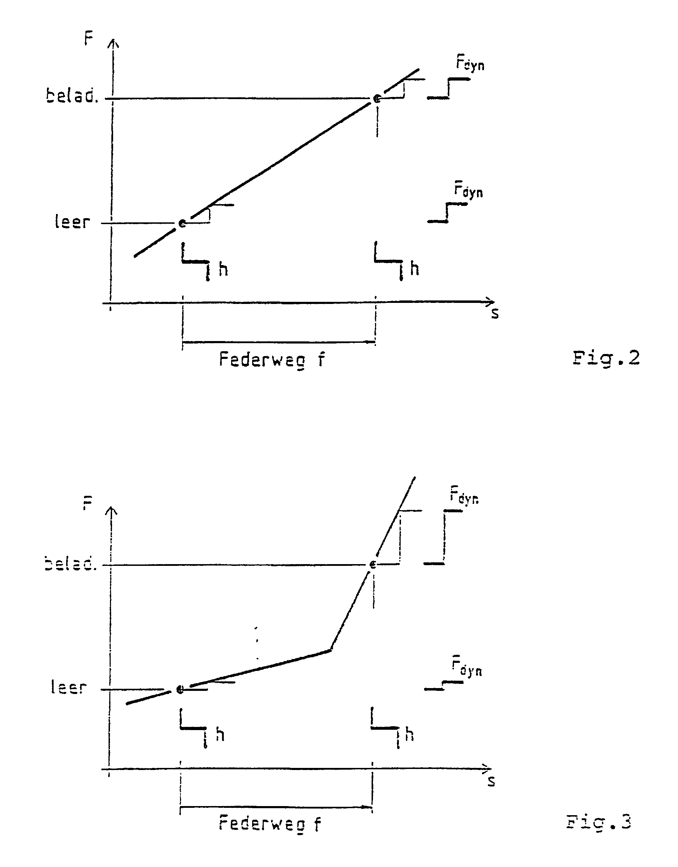

In **Fig. 2** ist eine Feder mit linearer Federcharakteristik dargestellt, die zwischen den Beladungszuständen 'leer' und 'beladen' um den Federweg f einfedert. Beim Überrollen einer Schienenunebenheit der Höhe h ergeben sich im leeren und beladenen Zustand gleich große dynamische Federkräfte F_{dyn}. Weil der Federweg f in der Regel klein gehalten werden muß, wird die Federcharakteristik steil. Deshalb sind die dynamischen Federkräfte F_{dyn} relativ groß.

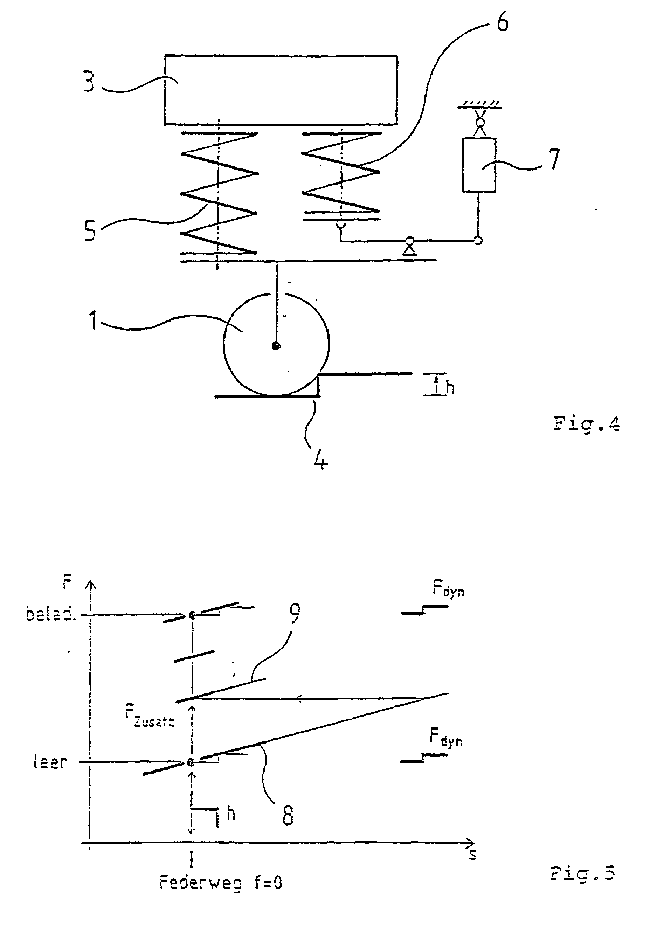

Unterschiedliche dynamische Federkräfte sind mit der in **Fig. 3** wiedergegeben Feder mit gestufter Federcharakterisitik verwirklicht. Bei unverändertem Federweg f gegenüber Fig. 2 wird im Zustand 'leer' eine sehr viel flachere, im Zustand 'beladen' eine sehr viel steilere Federcharakteristik verwendet. Die Feder reagiert auf die Schienenunebenheit der Höhe h im Zustand 'leer' mit einer kleineren und im Zustand 'beladen' mit einer größeren dynamischen Federkraft F_{dyn} als in Fig. 2. Mit der gestuften Federcharakteristik lassen sich im leeren Zustand also geringer Stoßbeschleunigungen des Fahrwerksrahmens 3 erreichen als mit einer linearen Feder. Im beladenen Zustand müssen dafür aber höhere Stoßbeschleunigungen in Kauf genommen werden.

**Fig. 4** zeigt schematisch eine Primärfederanordnung, die aus einer Leerlastfeder 5 und einer parallel dazu angeordneten Zusatzfeder 6 besteht. Im Zustand 'leer' überträgt allein die Leerlastfeder 5 die Kraft vom Fahrwerksrahmen 3 auf das Rad 1. Die Zusatzfeder 6 wird von einer Reguliereinrichtung 7 mehr oder weniger stark an der Kraftübertragung beteiligt, je nachdem wie sich bei Beoder Entladung der Abstand zwischen Fahrwerksrahmen 3 und Rad 1 ändert.

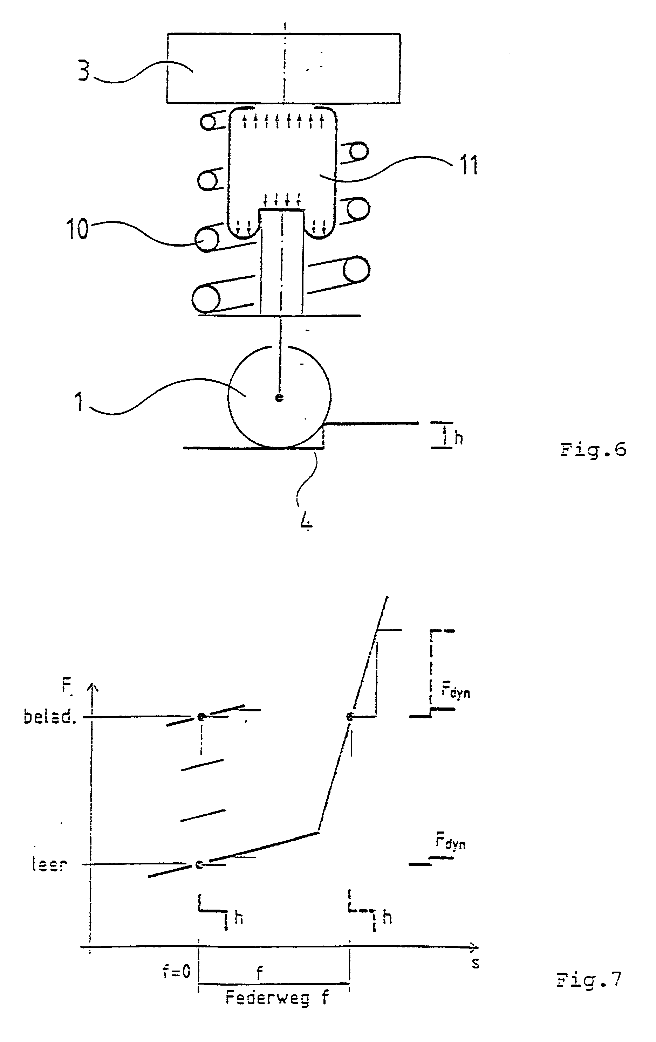

In **Fig. 5** ist das zur Anordnung nach Fig. 4 gehörende Federdiagramm wiedergegeben. Die Federkennlinie 8 der weichen Leerlastfeder 5 garantiert geringe dynamische Federkräfte F_{dyn} als Antwort auf eine Schienenunebenheit der Höhe h. Die weiche Leerlastfeder 5 allein würde zwischen den Zuständen 'leer' und 'beladen' jedoch extrem große Federwege f erfordern. Durch die Anstellung der Zusatzfeder 6 wird der Federweg f auf Null kompensiert. Die Zusatzfeder 6 nimmt dabei die Federkraft F_{Lad} auf, die genau der Last aus der zusätzlichen Beladung entspricht. Die Federcharakterisitik, d.h. die Steigung der Federkennlinie 9 von Leerlastfeder 5 plus Zusatzfeder 6 bleibt dabei nahezu unverändert. Unabhängig von der jeweiligen Belastung sind mit einer derartigen Federung geringe dynamische Federkräfte F_{dyn} erreichbar. Nachteilig ist, daß der Federweg f sehr groß wird, wenn die Reguliereinrichtung 7 ausfällt.

**Fig. 6** zeigt beispielhaft eine Ausgestaltung bei der die Leerlastfeder 5 als progressive Schraubenfeder 10 mit unterschiedlichem Durchmesser des Federdrahtes gestaltet und die Zusatzfeder 6 als Luftrollbalgfeder 11 ausgeführt ist. Die Federn 10 und 11 sind parallel geschaltet; der Luftdruck der Zusatzfeder 11 wird von der Annäherung des Fahrwerksrahmens 3 an das Rad 1 gesteuert.

Die erwartete Wirkung einer extrem progressiven Leerlastfeder 10 geht aus **Fig. 7** hervor. Im Zustand 'leer' ist allein die Leerlastfeder 10 im Arbeitsbereich mit sehr flacher Federcharakteristik wirksam. Zusatzkräfte aus der Beladung nimmt die Zusatzfeder 11 auf. Die gemeinsame Federcharakteristik bleibt weich. Sowohl im Zustand 'leer' wie im Zustand 'beladen' sind wegen der weichen Federcharakteristik die dynamischen Federkräfte F_{dyn} als Antwort auf eine Schienenunebenheit der Höhe h sehr gering. Bei Ausfall der Zusatzfeder 11 wird die Last allein von der Leerlastfeder 10 im Bereich mit extrem steiler Federcharakteristik getragen. Das führt zwar zu großen dynamischen Federkräften F_{dyn} hält aber den zulässigen Federweg f in erträglichen Grenzen.

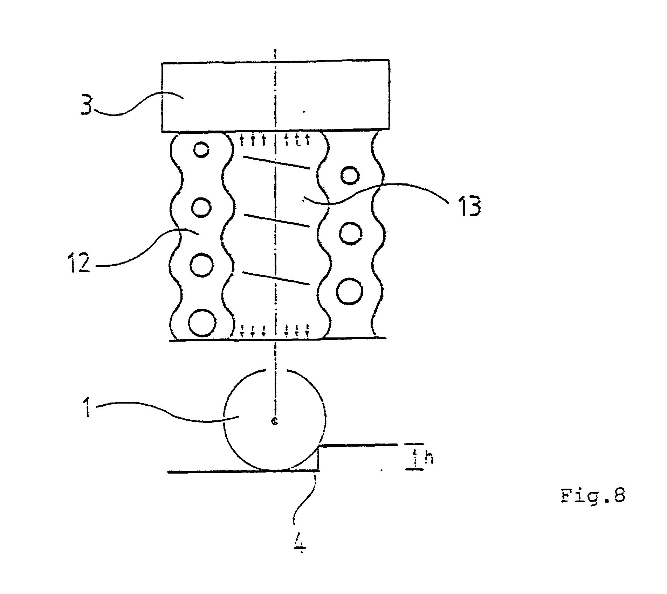

**Fig. 8** zeigt eine andere Ausgestaltung der Erfindung. Die Leerlastfeder 5 ist hier als Gummi-Schraubenfeder 12 ausgeführt mit einer progressiven Schraubenfeder als Grundelement. Die Wirkung der Zusatzfeder 6 wird durch Verwendung des Innenraumes 13 der Gummischraubenfeder 12 als Druckbehälter erreicht. Der Druck kann dabei pneumatisch oder hydraulisch aufgebaut werden.

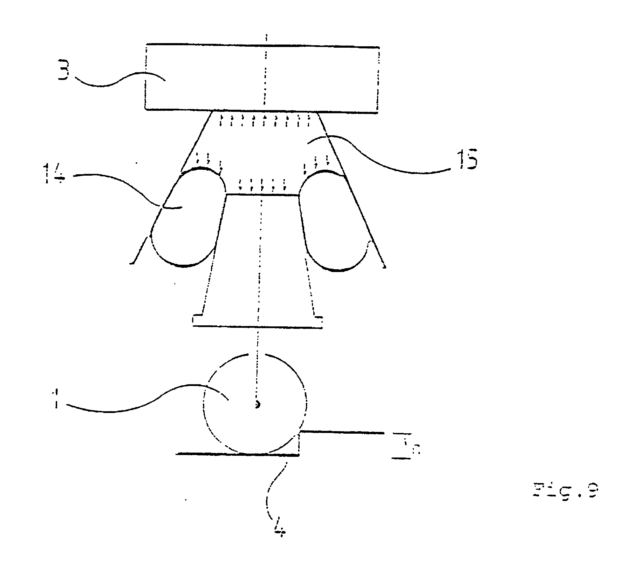

Eine weitere Ausgestaltung ist in **Fig. 9** dargestellt. Die Leerlastfeder 5 ist als Gummi-Rollfeder 14 gestaltet. Für die Zusatzfeder 6 wird der Innenraum 15 der Gummi-Rollfeder 14 mit Druck beaufschlagt.

### Bezugszeichenliste

- 1: Rad
- 2: Primärfeder
- 3: Fahrwerksrahmen
- 4: Schiene
- 5: Leerlastfeder
- 6: Zusatzfeder
- 7: Reguliereinrichtung
- 8: Federkennlinie Leerlastfeder
- 9: Federkennlinie Leerlastfeder plus Zusatzfeder
- 10: progressive Schraubenfeder
- 11: Luftrollbalgfeder
- 12: Gummi-Schraubenfeder
- 13: Innenraum der Gummi-Schraubenfeder
- 14: Gummi-Rollfeder
- 15: Innenraum der Gummi-Rollfeder

## Patentansprüche

1. Federeinrichtung zur Verbesserung des Fahrkomforts, insbesondere für Schienenfahrzeuge, beinhaltend eine weiche Feder, die im Belastungszustand 'Fahrzeug leer' eine flache Federkennlinie aufweist und die bei nur geringer Erhöhung der Federkraft in eine steile Federkennlinie übergeht, **dadurch gekennzeichnet, dass** die weiche Feder als Primärfeder (2) zwischen Rad (1) und Fahrwerksrahmen (3) angeordnet ist und dass zur Aufnahme von zusätzlichen Federkräften, welche durch die Beladung des Fahrzeuges entstehen, eine zweite, weiche Zusatzfeder (6) vorgesehen ist, die regulierend eingreift, wenn die Einfederung einen einstellbaren Wert überschreitet.

2. Federeinrichtung nach Anspruch 1, **dadurch gekennzeichnet, dass** die Primärfeder (2) und die Zusatzfeder (6) parallel geschaltet sind.

3. Federeinrichtung nach Anspruch 1 oder 2, **dadurch gekennzeichnet, dass** die Primärfeder (2) und die zuschaltbare Zusatzfeder (6) ein Bauelement bilden.

## Claims

1. Spring assembly for improving ride comfort, in particular for rail vehicles, comprising a soft spring which exhibits a flat spring characteristic in the "vehicle empty" laden state and which changes to a steep spring characteristic with only a tiny increase in the spring force, **characterised in that** the soft spring is arranged as primary spring (2) between the wheel (1) and the chassis frame (3) and **in that** for reception of additional spring forces occurring due to the loading of the vehicle, a second soft auxiliary spring (6) is provided which intervenes with a regulating function when the spring compression exceeds an adjustable value.

2. Spring assembly according to claim 1, **characterised in that** the primary spring (2) and the auxiliary spring (6) are connected in parallel.

3. Spring assembly according to claim 1 or 2, **characterised in that** the primary spring (2) and the actuatable auxiliary spring (6) form a construction element.

## Revendications

1. Suspension pour améliorer le confort, en particulier pour des véhicules ferroviaires, contenant un ressort souple qui, dans l'état de charge 'véhicule vide', présente une courbe caractéristique de ressort plate et qui, lorsque sa force n'augmente que faiblement, présente une courbe caractéristique à forte pente, **caractérisée en ce que** le ressort souple est disposé comme ressort primaire (2) entre la roue (1) et le châssis (3), et **en ce qu'**il est prévu, pour recevoir des forces de ressort supplémentaires causées par le chargement du véhicule, un second ressort supplémentaire souple (6) qui a une action régulatrice lorsque la compression du ressort dépasse une valeur apte à être réglée.

2. Suspension selon la revendication 1, **caractérisée en ce que** le ressort primaire (2) et le ressort supplémentaire (6) sont montés en parallèle.

3. Suspension selon la revendication 1 ou 2, **caractérisée en ce que** le ressort primaire (2) et le ressort supplémentaire (6) apte à être ajouté forment un élément de construction.
